## Europäisches Patentamt
## European Patent Office
## Office européen des brevets

(11) Veröffentlichungsnummer: **0 047 965**
**A2**

(12)

# EUROPÄISCHE PATENTANMELDUNG

(21) Anmeldenummer: 81107053.1

(22) Anmeldetag: 08.09.81

(51) Int. Cl.³: **G 03 B 21/38**

(30) Priorität: 11.09.80 DE 3034267

(43) Veröffentlichungstag der Anmeldung:
24.03.82 Patentblatt 82/12

(84) Benannte Vertragsstaaten:
AT CH FR GB LI

(71) Anmelder: AGFA-GEVAERT Aktiengesellschaft
Camera-Werk
Postfach
D-8000 München 90(DE)

(72) Erfinder: Stemme, Otto, Dr.
Heideckstrasse 29
D-8000 München 19(DE)

(72) Erfinder: Lermann, Peter, Dr.
Post Feldkirchen
D-8152 Naring 106 1/2(DE)

(72) Erfinder: Stenzenberger, Volkmar, Dr.
Fasanenstrasse 97
D-8025 Unterhaching(DE)

(72) Erfinder: Theer, Anton
Bozener Strasse 5
D-8000 München 90(DE)

(72) Erfinder: Winkler, Friedrich
Alfred-Lingg-Strasse 2
D-8025 Unterhaching(DE)

(72) Erfinder: Zanner, Johann
Albert-Schweitzer-Strasse 1a
D-8025 Unterhaching(DE)

(54) Kinematographisches Wiedergabegerät mit einer Vorrichtung zum optischen Abtasten einer Marke auf dem Filmrand.

(57) Bei einem kinematografischen Wiedergabegerät mit einer Filmtransportvorrichtung zum schrittweisen Vorbeitransportieren eines einseitig perforierten Filmes an einem Bildfenster und mit einer Vorrichtung zum optischen Abtasten einer Marke auf einem Rand des Filmes wird vorgeschlagen, die Abtastvorrichtung in einer Auflagefläche für den nicht perforierten Filmrand (RN) in Filmlaufrichtung gesehen vor dem ersten seitlichen Filmführungselement (6a, 3d) wenigstens zwei Bildlängen vor dem Bildfenster (1) gegenüber dem dem Bildfenster (1) abgewandten Ende (4) des Greiferbewegungsbereiches anzuordnen.

Fig. 1

# AGFA-GEVAERT AG

**LEVERKUSEN**

0047965

CAMERA-WERK MÜNCHEN
PATENTABTEILUNG

_— 7 —_

CW 2455.5 PP/MP

10.09.80
10-hl-ew
0116C

## Kinematografisches Wiedergabegerät mit einer Vorrichtung zum optischen Abtasten einer Marke auf dem Filmrand

Die Erfindung betrifft ein kinematografisches Wiedergabegerät mit einer Fimtransportvorrichtung zum schrittweisen Vorbeitransportieren eines einseitig perforierten Filmes an einem Bildfenster und mit einer Vorrichtung zum optischen Abtasten einer Marke auf einem Rand des Filmes.

Ein derartiges Wiedergabegerät ist beispielsweise aus der DE-OS 27 46 036 bekannt. Die Marken dienen zum Kennzeichnen von im Stillstand wiederzugebenden Einzelbildern. Die Vorrichtung zum Erkennen der Marken besteht u.a. aus einer Abtaststation, die in Filmlaufrichtung gesehen nach dem Bildfenster auf der Perforationsseite des Filmes liegt. Die Marken sind gegenüber dem zugehörigen Bild auf dem Film vorversetzt.

Wie sich gezeigt hat, müssen bei der Konstruktion eines entsprechenden Wiedergabegerätes unter Berücksichtigung der bei

CW 2455.5 PP/MP

-2-

Belichtung und Abtastung auftretenden Probleme verschiedene
einander an sich ausschließende Bedingungen erfüllt werden.
So ist es vorteilhaft, die Marke vom Bildfenster möglichst
weit weg zu setzen, da dann Bildprojektionsfenster und
Markier- bzw. Abtastvorrichtung voneinander räumlich getrennt sind und keine Wechselwirkungen etwa durch Streulicht
erfolgen können. Andererseits ist die Markierungsvorrichtung
zweckmäßig höchstens so weit vom Bildfenster entfernt, daß
sie mit diesem in einem Werkstück hergestellt werden kann,
sonst muß nämlich bei der Montage der Geräte ein eigener
Justiervorgang vorgesehen werden.

Eine weitere Schwierigkeit besteht darin, daß die Markiervorrichtung nicht verschmutzen darf. Schmutz kann im Wiedergabegerät beispielsweise durch den Greifer oder durch den
von den Filmpositioniermitteln bewirkten Filmabrieb entstehen. Ferner soll die Marke selbst möglichst groß und sauber
begrenzt sein, damit sie von entsprechenden Detektoren im
Wiedergabegerät leicht und zuverlässig erkannt werden kann.
Sie darf aber auf keinen Fall im Bild sichtbar sein oder
dorthin überstrahlen.

Schließlich ist es wünschenswert, die Markiervorrichtung
außerhalb des von der Umlaufblende benötigten Bereiches anzubringen, damit deren Stellung bei der Markierung nicht berücksichtigt werden muß.

Alle diese an sich widersprüchlichen Bedingungen werden gemäß der Erfindung dadurch erfüllt, daß die Abtastvorrichtung
in einer Auflagefläche für den nicht perforierten Filmrand
in Filmlaufrichtung gesehen vor dem ersten seitlichen Filmführungselement wenigstens zwei Bildlängen vor dem Bildfenster gegenüber dem dem Bildfenster abgewandten Ende des
Greiferbewegungsbereiches angeordnet ist.

CW 2455.5 PP/MP

-3-

Die Anordnung der Abtastvorrichtung in der Auflagefläche führt zu einer scharfen Begrenzung des abgetasteten Filmbereiches. Die Wahl des nicht perforierten Filmrandes führt zu besonderer Störungsfreiheit. Die Vorverlegung vor das Bildfenster verhindert, daß vom Greifer oder den Filmandruck- und -Führungsmitteln herrührender Abrieb die Markiervorrichtung verschmutzt. Gleichzeitig ist die Filmführungsplatine so ausgebildet, daß Bildfenster und Markierungsöffnung auf einem Werkstück sind und somit nicht zueinander justiert werden müssen.

Gemäß weiterer Ausbildung der Erfindung enthält die Abtastvorrichtung für die Marke eine Öffnung in der Auflagefläche für den Filmrand, hinter der ein lichtempfindlicher Empfänger zum Erzeugen des für die Erkennung erforderlichen elektrischen Signals angeordnet ist. Wegen der scharfen Öffnungsbegrenzung ist es nicht nötig, die Marke mit optischen Mitteln oder mit einem Lichtleitstab auf den Detektor zu fokussieren oder zu begrenzen.

Ferner ist gemäß der Erfindung zweckmäßig, wenn die Öffnung in Filmlaufrichtung gesehen wenigstens zweimal so lang wie breit ist. Dadurch wird die Erkennungssicherheit erhöht. Die genaue Positionierung des Bildes im Bildfenster erfolgt nämlich mit dem Greifer. Eine Justierung des Bildstriches ist ohne weiteres mit den bekannten Mitteln möglich, da der Justierbereich im Erfassungsbereich des länglichen Markenabtastfensters liegt.

Weitere Einzelheiten der Erfindung ergeben sich aus der Beschreibung, in der im folgenden anhand der Zeichnung ein Ausführungsbeispiel erörtert wird. Es zeigen

CW 2455.5 PP/MP

Fig. 1    eine Aufsicht auf erfindungsgemäße Teile eines
         kinematografischen Wiedergabegerätes,

Fig. 2    eine Aufsicht auf ein verwendbares markiertes
         Filmstück.

Die Figur zeigt eine Aufsicht auf die Filmführungs-Platine 3
eines erfindungsgemässen Wiedergabegerätes. Das Filmfenster
1 ist mit einer Scheibe 2 abgedeckt. Mit 4 ist der Greiferschlitz bezeichnet, in den in bekannter Weise der Greifer
einfällt. Letzterer ist auf der anderen, nicht dargestellten
Platinenhälfte angeordnet.

Die Gesamtanordnung der Platine im Gerät ist beispielsweise
in P 30 09 791.7 (CW 2371.2) dargestellt; da sie jedoch im
Zusammenhang mit der vorliegenden Erfindung nicht von Bedeutung erscheint, wurde auf ihre Wiedergabe hier verzichtet.

Die Filmführungsbahn wird auf der einen Seite von an die
Platine 3 angeformten Rippen 3d begrenzt, auf der anderen
Seite durch angefederte Metallführungen 6a und 6b, die Toleranzen in der Filmbreite ausgleichen. Die Filmführungen 6a
und 6b greifen durch entsprechende Öffnungen 5a und 5b der
Platine durch. Ferner ist die Filmführung in den Bereichen
3b leicht abgeschrägt.

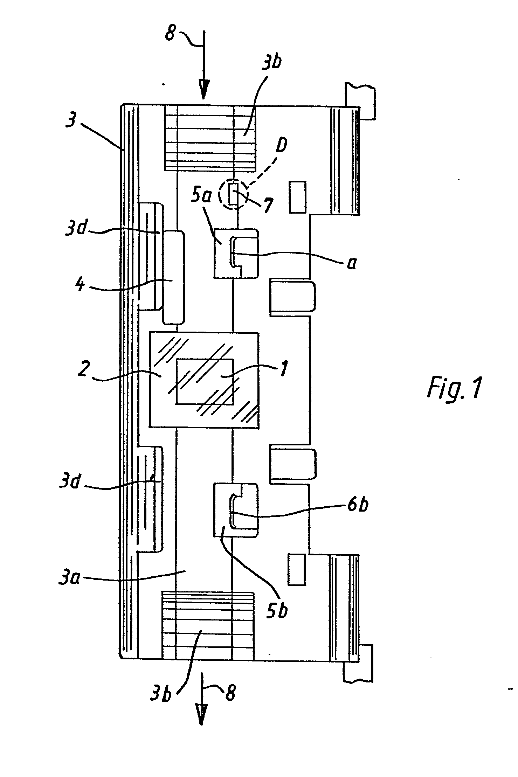

Die Öffnung, hinter der sich der lichtepfindliche Empfänger
D, zweckmässig ein Fototransistor oder eine Fotodiode, befindet, ist mit 7 bezeichnet. Wie der Figur 1 zu entnehmen
ist, ist sie rechteckig, und erstreckt sich längs der Filmführungsrichtung 8.

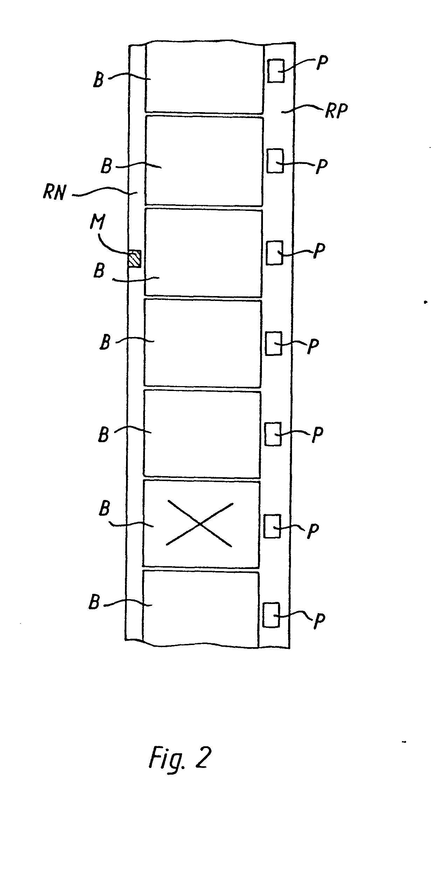

Fig. 2 zeigt einen gemäß der Erfindung mit einer Marke M
versehen, einseitig perforierten Film mit einem Perfora-

CW 2455.5 PP/MP

- 5 -

tionsrand RP mit Perforationslöchern P, mit Einzelbildern B und einer Marke M auf dem nichtperforierten Rand RN. Das in der Bildbühne befindliche Bild ist mit einem "X" markiert. Wie an dieser Figur zu erkennen ist, befindet sich die Marke M gegenüber einem Perforationsloch P auf mittlerer Bildhöhe.

Die Marke M auf dem Film ist quadratisch. Einzelheiten dazu sind der Anmeldung P 30 30 875.9 (CW 2434.0) zu entnehmen.

Die Abtast-Öffnung 7 ist wenigstens zweimal so lang wie breit, jedoch im wesentlichen gleich breit wie die Marke auf dem Film. Dies führt nicht, wie an sich zu vermuten wäre, zu einer ungenauen Positionierung des Filmes im Bildfenster, weil die Lage des Filmes nicht durch die Marke, sondern in an sich bekannter Weise durch den Greifer bestimmt ist. Wenn dieser nämlich von der nicht dargestellten elektrischen Steuervorrichtung ausgehoben wird, steht der Film still.

Durch die Verlängerung der Abtastöffnung 7 wird es auch möglich, eine an sich bekannte und übliche Bildstrichverstellung vorzusehen. Diese Bildstrichverstellung verschiebt die Lage der Marke in der Stillstandsphase des Bildes im Bereich der Länge des Schlitzes; es liegt also in diesem Bereich unabhängig von der Lage der Marke im Schlitz die gleichen fotoelektrischen Verhältnisse vor.

Ferner erlaubt die längliche Ausgestaltung des Abtastschlitzes grössere Toleranzen in der Lage sowohl der Belichtungsöffnung in der Kamera als auch in der Abtastöffnung im Wiedergabegerät, was besonders wichtig ist, wenn die Filmführungsplatinen mit unterschiedlichen Werkzeugen hergestellt werden.

CAMERA-WERK MÜNCHEN
PATENTABTEILUNG

CW 2455.5 PP/MP

10.09.80

10-h1-ew

0116C

_ 6 -

Ansprüche

1.  Kinematografisches Wiedergabegerät mit einer Fimtransportvorrichtung zum schrittweisen Vorbeitransportieren
    eines einseitig perforierten Filmes an einem Bildfenster und mit einer Vorrichtung zum optischen Abtasten einer Marke auf einem Rand des Filmes, dadurch
    gekennzeichnet, daß die Abtastvorrichtung in einer Auflagefläche für den nicht perforierten Filmrand (RN) in
    Filmlaufrichtung gesehen vor dem ersten seitlichen
    Filmführungselement (6a, 3d) wenigstens zwei Bildlängen
    vor dem Bildfenster (1) gegenüber dem dem Bildfenster
    (1) abgewandten Ende (4) des Greiferbewegungsbereiches
    angeordnet ist.

2.  Kinematografisches Wiedergabegerät nach Anspruch 1, dadurch gekennzeichnet, daß die Abtastvorrichtung für die
    Marke (M) eine Öffnung (7) in der Auflagefläche für den
    Filmrand (RN) enthält, hinter der ein lichtempfindlicher Empfänger (D) zum Erzeugen des für die Erkennung
    erforderlichen elektrischen Signals angeordnet ist.

CW 2455.5 PP/MP                    - 7 -

3.    Kinematografisches Wiedergabegerät nach Anspruch 2, dadurch gekennzeichnet, daß die Öffnung (7) in Filmlaufrichtung (8) gesehen wenigstens zweimal so lang wie
      breit ist.

Hierzu  2  Blatt Zeichnungen

0047965

Fig.1

0047965

Fig. 2